# EUROPÄISCHE PATENTANMELDUNG

(11) **EP 2 362 127 A2**
(43) Veröffentlichungstag der Anmeldung: **31.08.2011**
(21) Anmeldenummer: 10016185.0
(22) Anmeldetag: 30.12.2010
(51) Int. Cl.: F16L 3/12, F16L 3/137, F16B 33/06

(54) **Verbindungsvorrichtung sowie Verwendung eines metallischen Werkstoffes**

(30) Priorität: 18.02.2010 DE 102010008447
(71) Anmelder: HYDAC Accessories GmbH, 66280 Sulzbach/Saar (DE)
(72) Erfinder: Hiss, Helmut, 75228 Ispringen (DE); Caspari, Jochen, 66606 St. Wendel (DE)
(74) Vertreter: Bartels & Partner

(57) **Zusammenfassung**

1. Verbindungsvorrichtung sowie Verwendung eines metallischen Werkstoffes.
2. Die erfindungsgemäße Verbindungsvorrichtung in Form von Schellen oder Klemmen, mit mindestens einem Umfassungskörper (10), der einen vorgebbaren Festlegeraum (12) für eine wieder lösbare Festlegung mindestens eines Drittbauteils umfasst und der mit mindestens einer zweiteiligen Festlegeeinrichtung (14) zur Veränderung der Größe des Festlegeraumes (12) zusammenwirkt, ist dadurch gekennzeichnet, dass zumindest Teile (16, 18) der jeweiligen Festlegeeinrichtung (14), die im Festlegezustand miteinander verbunden sind, derart ein tribologisches System ausbilden, dass unter Einsatz mindestens eines metallischen Additives und/oder durch geeignete metallische Ausbildung des jeweiligen Teils (16, 18) der Festlegeeinrichtung (14) als Funktionskomponente des tribologischen Systems wirksam einer Kaltverschweißung begegnet ist.

## Beschreibung

Die Erfindung betrifft eine Verbindungsvorrichtung in Form von Schellen oder Klemmen, bei der ein vorgebbarer Festlegeraum mittels einer Festlegeeinrichtung veränderbar ist, sowie die Verwendung eines metallischen Werkstoffes bei der Ausbildung eines Teiles der Festlegeeinrichtung.

Derartige Verbindungsvorrichtungen kommen bei der Befestigung und Montage von Bauteilen wie beispielsweise Rohren, Schläuchen, Kabeln, Druckspeichern und Katalysatoren zum Einsatz. In der praktischen Ausführung sind beispielsweise Rundstahlbügel-Schellen, Flachstahlbügel-Schellen, Diagonalschellen, Gelenkband-Konsolenschellen und Gelenkbolzen-Spannbänder bekannt. Gemeinsam ist bei den verschiedenen Ausführungsformen der Verbindungsvorrichtung, dass sie zur lösbaren Festlegung eines Drittbauteils mit einer Festlegeeinrichtung zusammenwirken. Die Festlegeeinrichtung weist beispielsweise einen Schraubenbolzen sowie ein korrespondierendes Gegengewinde z. B. als Teil einer Schraubenmutter auf. Zum sicheren Festlegen des Drittbauteils in der Verbindungsvorrichtung wird durch die Festlegeeinrichtung unter Verringerung eines Aufnahmeraumes die Verbindungsvorrichtung in einen gespannten, an dem festzulegenden Drittbauteil anliegenden Zustand gebracht. Damit das Drittbauteil auch beim Einwirken mechanischer Belastungen auf die Verbindungsvorrichtung langfristig sicher angeordnet bleibt, ist durch die dahingehende Festlegeeinrichtung eine ausreichend hohe Vorspannkraft aufzubringen. Sofern die Festlegeeinrichtung wie im Stand der Technik bekannt einen Schraubenbolzen sowie ein damit zusammenwirkendes Gegengewinde aufweist, treten bei der Erzeugung der erforderlichen Vorspannkraft auch erhebliche Kräfte an den aneinander anliegenden Gewindeflächen des Schraubenbolzens und des Gegengewindes auf.

Bei den in der Technik üblichen Materialien wie beispielsweise Edelstahl für Schraubenkopf und Gegengewinde kommt es hierbei bereits beim Montagevorgang der Verbindungsvorrichtung oftmals zu einem Kaltverschweißen des Schraubenbolzens mit dem Gegengewinde. Dergestalt ist bei einer Demontage zumindest ein zerstörungsfreies Lösen der Festlegeeinrichtung oftmals nicht möglich und durch die zum gewaltsamen Lösen der Festlegeeinrichtung erforderlichen Kräfte kann hierbei ein nicht unerhebliches Verletzungsrisiko entstehen.

Im Stand der Technik ist es bekannt, durch den Einsatz geeigneter Schmiermittel, beispielsweise in Form von Schmierpasten, einem Kaltverschweißen des Schraubenbolzens mit dem Gegengewinde bei der Montage der Verbindungsvorrichtung entgegenzuwirken. Jedoch kann insbesondere bei einer langen Betriebszeit der Verbindungsvorrichtung und beim Einwirken von Umwelteinflüssen wie Regen, Schnee, Kälte, Hitze oder auch Reinigungsmitteln auf die Festlegeeinrichtung auch bei Einsatz der genannten Schmierstoffe keine zerstörungsfreie Demontage der Festlegeeinrichtung gewährleistet werden. Wird bei der Montage der Verbindungsvorrichtung oder bei einer beispielsweise für Reparatur- oder Reinigungszwecke an dem Drittbauteil vorübergehend gelösten Verbindungsvorrichtung ein Schmieren der Festlegeeinrichtung vergessen, droht bereits beim anschließenden Montagevorgang ein Kaltverschweißen des Schraubenbolzens mit dem Gegengewinde.

Aufgabe der Erfindung ist es daher, eine Verbindungsvorrichtung zu schaffen, die auch bei wiederholten Montage- und Demontagevorgängen zuverlässig und langfristig ein Kaltverschweißen der Festlegeeinrichtung vermeidet. Eine weitere Aufgabe der Erfindung ist das Bereitstellen einer Möglichkeit zur Vermeidung von Kaltverschweißen bei Festlegeeinrichtungen.

Erfindungsgemäß sind diese Aufgaben durch eine Verbindungsvorrichtung gelöst, die die Merkmale des Patentanspruchs 1 in seiner Gesamtheit aufweist, sowie durch die Verwendung eines metallischen Werkstoffs, die die Merkmale des Patentanspruchs 11 in seiner Gesamtheit aufweist. Spezielle Ausführungsformen der Erfindung sind in den abhängigen Patentansprüchen angegeben.

Die erfindungsgemäße Verbindungsvorrichtung in Form von Schellen oder Klemmen weist mindestens einen Umfassungskörper auf, der einen vorgebbaren Festlegeraum für eine wieder lösbare Festlegung mindestens eines Drittbauteils umfasst und der mit mindestens einer zweiteiligen Festlegeeinrichtung zur Veränderung der Größe des Festlegeraumes zusammenwirkt. Dadurch dass gemäß dem kennzeichnenden Teil des Patentanspruches 1 zumindest Teile der jeweiligen Festlegeeinrichtung, die im Festlegezustand miteinander verbunden sind, derart ein tribologisches System ausbilden, dass unter Einsatz mindestens eines metallischen Additives und/oder durch geeignete metallische Ausbildung des jeweiligen Teils der Festlegeeinrichtung als Funktionskomponente des tribologischen Systems wirksam einer Kaltverschweißung begegnet ist, ist für den Fachmann in überraschender Weise und insbesondere ohne den Einsatz von Schmierstoffen eine Verbindungsvorrichtung bereitgestellt, bei der zuverlässig und langfristig ein Kaltverschweißen der Festlegeeinrichtung vermieden ist. Dadurch dass das jeweilige Teil der Festlegeeinrichtung mindestens ein metallisches Additiv aufweist oder geeignet metallisch ausgebildet ist, ergibt sich eine langfristig zuverlässig arbeitende Festlegeeinrichtung, die sich in einfacher Weise montieren lässt und bei deren Montage nicht weitere Hilfsmittel, beispielsweise in Form von Schmierstoffen, bereitgestellt werden müssen. Auch bei einer Demontage vor Ort und insbesondere bei durchgeführten Reinigungsarbeiten an der Verbindungsvorrichtung oder dem damit festgelegten Drittbauteil kann diese anschließend wieder hemmnisarm unter Verwendung der Originalteile der Festlegeeinrichtung montiert werden, ohne dass hierbei ein Kaltverschweißen der Festlegeeinrichtung zu befürchten wäre.

Bei einer Ausführungsform der erfindungsgemäßen Verbindungseinrichtung weisen die im Festlegezustand miteinander verbundenen Teile der Festlegeeinrichtung zumindest in einem Abschnitt ihrer jeweiligen Oberfläche voneinander abweichende metallische Additive auf oder sind aus voneinander abweichenden metallischen Materialien gebildet. Es hat sich gezeigt, dass durch diese Maßnahmen ein Kaltverschweißen der miteinander verbundenen Teile der Festlegeeinrichtung wirksam vermieden werden kann. Beispielsweise kann ein Teil der Festlegeeinrichtung aus einem ersten Metall und ein weiteres Teil der Festlegeeinrichtung aus einem weiteren hiervon abweichenden Metall gebildet sein, um bereits hierdurch den gewünschten Effekt zu erzielen. Bei einer alternativen Lösung können beide Teile der Festlegeeinrichtung zwar das gleiche Grundmaterial aufweisen, jedoch weist mindestens eines der Teile in einem Abschnitt seiner Oberfläche und insbesondere einem Teil seiner Oberfläche, der in Kontakt mit einem Teil der Oberfläche des weiteren Teils der Festlegeeinrichtung kommt, ein metallisches Additiv auf, das von dem Grundwerkstoff der beiden Teile der Festlegeeinrichtung abweicht. Bei der letztgenannten Lösung ergibt sich ein Kostenvorteil, sofern als metallisches Additiv ein gegenüber dem Grundwerkstoff teureres Material verwendet werden soll.

Bei einer Ausführungsform der erfindungsgemäßen Verbindungsvorrichtung sind ein erstes und zweites Teil der Festlegeeinrichtung durch eine lösbare Verbindung, insbesondere durch eine Schraubverbindung oder eine Klemmverbindung im Festlegezustand miteinander verbunden. Mittels einer Schraubverbindung als auch einer Klemmverbindung lassen sich durch die Festlegeeinrichtung ausreichende Vorspannkräfte auf den oder die Umfassungskörper der Verbindungseinrichtung ausüben. So ist im montierten Zustand das Drittbauteil sicher in der Verbindungsvorrichtung gehalten. Des Weiteren lassen sich Schraub- und Klemmverbindungen in einfacher Weise und mit geringem Werkzeugaufwand auch vor Ort betätigen.

Bei einer Ausführungsform der erfindungsgemäßen Verbindungsvorrichtung ist das erste Teil der Festlegeeinrichtung in Form eines Bolzens ausgebildet und das zweite damit verbindbare Teil an wählbaren Positionen des ersten Teils anordenbar. Durch die Anordenbarkeit des zweiten Teils der Festlegeeinrichtung an wählbaren Positionen des ersten Teils der Festlegeeinrichtung kann die Größe des Festlegeraums der Verbindungsvorrichtung den jeweiligen Erfordernissen zumindest in gewissen Grenzen angepasst werden. Sofern es sich bei dem als Bolzen ausgeführten ersten Teil der Festlegeeinrichtung um einen Schraubenbolzen handelt, weist das zweite Teil der Festlegeeinrichtung ein korrespondierendes Gegengewinde auf. Je nach Eindrehtiefe des Schraubenbolzens in das zugehörige Gegengewinde lassen sich so unterschiedliche Größen des Festlegeraumes wählen.

Bei einer Ausführungsform der erfindungsgemäßen Verbindungsvorrichtung ist das zweite Teil der Festlegeeinrichtung in Form eines Einlegeteils von einem Abschnitt des Umfangskörpers zumindest teilweise umschlossen und gesichert. Bei dem Abschnitt des Umfangskörpers handelt es sich vorzugsweise um einen Endabschnitt, der beispielsweise um einen zylinderförmigen Zapfen als Einlegeteil gelegt ist und dergestalt eine Aufnahmeschlaufe für das Einlegeteil bildet. Ein randnaher Abschnitt des Endbereichs des Umfassungskörpers kann hierbei zur mechanischen Fixierung beispielsweise durch Punktschweißen mit dem restlichen Umfassungskörper verbunden sein. Damit das Einlegeteil mit dem ersten Teil der Festlegeeinrichtung beispielsweise einem Schraubenbolzen kooperieren kann, weist es ein entsprechendes Gegengewinde auf, in das der Schraubenbolzen eindrehbar ist. Hierzu ist in dem umgelegten Endbereich eine geeignete Ausnehmung vorgesehen, damit das Gewinde des Einlegeteils für den Schraubenbolzen zugänglich ist.

Bei einer Ausführungsform der erfindungsgemäßen Verbindungsvorrichtung ist das zweite Teil der Festlegeeinrichtung als separates, vollständig vom Umfassungskörper lösbares Teil ausgeführt. In diesem Fall kann das zweite Teil der Festlegeeinrichtung beispielsweise durch eine Schraubenmutter oder allgemein um einen vom Umfassungskörper lösbaren Körper mit einem zum Schraubengewinde des ersten Teils der Festlegeeinrichtung korrespondierenden Gegengewinde gebildet sein. Als Gegenlager für das zweite Teil mit Gegengewinde kann ein zylinderförmiger Zapfen als Einlegeteil bei dem zugeordneten Endbereich des Umfassungskörpers vorgesehen sein. Der dahingehende Zapfen weist in diesem Fall selber kein Gewinde auf, sondern eine quer zu seiner Längserstreckung verlaufende Ausnehmung, die den Schraubenbolzen zumindest teilweise aufnehmen kann. An der den Zapfen teilweise umschließenden Aufnahmeschlaufe des Endbereichs des Umfassungskörpers können durch eine geeignete Ausnehmung Anlageflächen ausgebildet sein, an denen sich Werkzeugangriffsflächen des zweiten Teils abstützen können, so dass das zweite Teil verdrehsicher im Bereich der Aufnahmeschlaufe gelagert ist. Zur sicheren Betätigung des ersten Teils der Festlegeeinrichtung, sofern dies als Schraubenbolzen ausgeführt ist, kann insbesondere vorgesehen sein, dass es sich bei dem Schraubenbolzen um einen Schraubenbolzen mit Innensechskantkopf handelt, so dass hier eine zuverlässige Betätigung mittels eines Innensechskantschlüssels gewährleistet ist.

In einer Ausführungsform der erfindungsgemäßen Verbindungsvorrichtung ist in dem nicht festgelegten Zustand der Festlegeeinrichtung das erste Teil der Festlegeeinrichtung zumindest in Richtung seiner Längserstreckung relativ zum Umfassungskörper verschiebbar. Dergestalt lässt sich auch bei einem gegenüber dem Umfassungskörper nicht verschiebbaren zweiten Teil der Festlegeeinrichtung durch ein Verschieben des ersten Teils der Festlegeeinrichtung eine Veränderung der Größe des Festlegeraumes erreichen. Bei einer Ausführungsform ist dergestalt das erste Teil der Festlegeeinrichtung soweit in Richtung seiner Längserstreckung relativ zum Umfassungskörper verschiebbar, dass es vollständig von diesem gelöst werden kann.

Bei einer Ausführungsform der erfindungsgemäßen Verbindungsvorrichtung ist an dem Umfassungskörper ein Anschlag für das erste Teil der Festlegeeinrichtung angeordnet. Sofern es sich bei dem ersten Teil der Festlegeeinrichtung um einen Schraubenbolzen handelt, kann es sich bei dem Anschlag insbesondere um eine bevorzugt an einem Endbereich des Umfassungskörpers vorgesehene Ausnehmung handeln, durch die zwar der Schaft des Bolzens dringen kann, jedoch der Kopf des Schraubenbolzens an die die Ausnehmung berandenden Abschnitte des Endabschnitts des Umfassungskörpers in Anlage kommt, so dass hierdurch ein Anschlag für den Schraubenkopf gebildet ist.

Bei einer Ausführungsform der erfindungsgemäßen Verbindungsvorrichtung ist der Anschlag für das erste Teil der Festlegeeinrichtung nicht direkt durch den Endbereich des Umfassungskörpers, sondern an einem zylinderförmigen Zapfen, der als Einlegeteil in eine Aufnahmeschlaufe an einem randnahen Abschnitt eines Endbereichs des Umfassungskörpers ausgebildet. Der Zapfen kann zwar vom Schaft des Schraubenbolzens durchdrungen werden, bildet jedoch für die Unterseite des Schraubenkopfes eine geeignete Anlagefläche aus, so dass hierdurch ein Anschlag für den Schraubenkopf gegeben ist.

Bei einer Ausführungsform der erfindungsgemäßen Verbindungsvorrichtung ist der Anschlag für den Schraubenkopf eines Schraubenbolzens als erstes Teil der Festlegeeinrichtung an dem zylinderförmigen Zapfen durch den Grund einer kreisförmigen Vertiefung ausgebildet, die in einer quer zu seiner Längsachse in den Zapfen eingebrachte Nut ausgebildet ist. Die sich in Richtung der freien Schenkel der Nut hierbei ausbildenden Hinterschneidungen zu beiden Seiten der Nut sichern den zumindest teilweise in die Vertiefung eingebrachten Schraubenkopf gegen ein Herausspringen, ähnlich einem Bajonettverschluss.

Bei einer Ausführungsform der erfindungsgemäßen Verbindungsvorrichtung weist das mindestens eine Teil ein metallisches Additiv oder der Werkstoff zumindest eines der Teile der Festlegeeinrichtung Chrom und/oder Kupfer und/oder Titan und/oder Nickel und/oder Aluminium auf. Es hat sich gezeigt, dass insbesondere sofern das erste oder zweite Teil der Festlegeeinrichtung aus Stahl bzw. Edelstahl gebildet ist, ein Hinzufügen eines metallischen Additivs zum zumindest oberflächennahen Material des anderen Teiles oder die Ausbildung zumindest oberflächennah des anderen Teils insbesondere in Form von Titan oder Kupfer für den Fachmann überraschend bereits einem Kaltverschweißen des ersten und zweiten Teils der Festlegeeinrichtung zuverlässig entgegenwirkt.

Bei einer Ausführungsform der erfindungsgemäßen Verbindungsvorrichtung ist mindestens ein Teil der Festlegeeinrichtung aus Stahl, insbesondere Edelstahl gebildet. Hierdurch ergibt sich der Vorteil, dass derartige Teile von Festlegeeinrichtungen, insbesondere sofern es sich um Schrauben und/oder Muttern handelt, als Standardbauteile in vielfältigen Ausführungen verfügbar sind.

Die Erfindung umfasst auch die Verwendung eines metallischen Werkstoffs als Additiv oder Material bei der Ausbildung der Oberfläche eines Teiles einer Festlegeeinrichtung, das im Festlegezustand mit einem weiteren Teil der Festlegeeinrichtung verbunden ist, um derart ein tribologisches System auszubilden, bei dem einem Kaltverschweißen der Teile der Festlegeeinrichtung begegnet ist.

Die Ausbildung des tribologischen Systems bei der Festlegeeinrichtung einer erfindungsgemäßen Verbindungsvorrichtung sowie allgemein bei Festlegeeinrichtungen, bei denen metallische Flächen in Anlage aneinander kommen und zum Kaltverschweißen neigen, kann in vielfältiger Weise erfolgen. Gemeinsam ist allen Ausführungsformen, dass ein erstes und ein zweites Teil, die in Anlage aneinander kommen, im Bereich der Oberflächen, die hierbei aneinander anliegen, voneinander abweichende Materialzusammensetzungen aufweisen. Im einfachsten Fall ist dies dadurch realisiert, dass für die beiden Teile jeweils unterschiedliche Materialien verwendet sind. Daneben ist es jedoch auch möglich und gegebenenfalls mit Kosteneinsparungen verbunden, wenigstens eines der Teile mindestens bereichsweise mit einem Schichtaufbau zu versehen, wobei es hierbei auch möglich ist, für dieses Teil dann das gleiche Grundmaterial zu verwenden wie für das weitere Teil.

Ein Schichtaufbau kann beispielsweise dadurch realisiert sein, dass eines der beiden Teile durch ein Beschichtungsverfahren wie beispielsweise elektrochemische Metallabscheidung (ECD: electrochemical deposition) beispielsweise mit dem Schichtwerkstoff Kupfer oder Kupfer/Nickel/Chrom versehen wird. Hierbei kann die elektrochemische Metallabscheidung mit und ohne Außenstrom erfolgen. Gegebenenfalls ist zur ausreichenden Haftung des Schichtwerkstoffs auf dem Grundwerkstoff zunächst eine geeignete Unterschicht auf den Grundwerkstoff aufzubringen, bevor der Schichtwerkstoff aufgetragen wird.

Als weitere Möglichkeit zum Auftragen des Schichtwerkstoffs bieten sich auch die PVD- und CVD-Technik an, d. h. die physikalische Abscheidung aus der Gasphase bzw. die chemische Abscheidung aus der Gasphase. Um Metalle in Schichtform durch PVD aufzubringen, ist hierbei zunächst die Überführung des Metalls in die Gasphase (Ausbildung der Transportform), der Transport zum Grundmaterial und anschließend der Schichtbildungsprozess durch beispielsweise Kondensation, Adsorption, Keimbildung und Schichtwachstum erforderlich. Im Fall der chemischen Abscheidung aus der Gasphase (CVD-Verfahren) ist das die Schicht bildende Metall in einer leicht flüchtigen chemischen Verbindung enthalten und wird in eine Reaktionskammer geleitet.

Während die Schichtabscheidung bei PVD prinzipiell eine Vakuumanlage erfordert, ist CVD auch bei Atmosphärendruck möglich.

Das Aufbringen des Schichtwerkstoffs kann auch in Form einer Schmelztauchschicht erfolgen. So lässt sich beispielsweise der Schichtwerkstoff Aluminium auf Stahl dergestalt aufbringen, dass ein Grundwerkstoff aus Stahl in ein Aluminiumbad getaucht wird. Die Bindung zwischen dem Grundwerkstoff und der aufzubringenden Schicht entsteht hierbei durch Legierungsbildung infolge Diffusion vom Grundwerkstoff in die Schicht und umgekehrt.

Im Vergleich zu den genannten Beschichtungsverfahren lassen sich durch Plattieren wesentlich dickere Beschichtungen erzeugen und der Verbund zwischen dem Grundwerkstoff und dem Schichtwerkstoff ist hierbei von hervorragender Festigkeit. Beim Plattieren können sowohl zwei- als auch mehrlagige Metall-Metall-Kombinationen hergestellt werden, und es entsteht hierbei ein so fester Verbund, dass dieser wie ein einheitlicher Werkstoff verwendbar ist. So lassen sich auf Stahl beispielsweise rostfreie Stähle, Kupfer und Legierungen und Aluminium und Legierungen, Nickel und Legierungen und Titan durch Plattieren aufbringen.

Nachstehend ist die Erfindung anhand eines in der Zeichnung dargestellten Ausführungsbeispiels im Einzelnen erläutert. Es zeigen:
- Fig. 1: eine perspektivische Schrägansicht eines Ausführungsbeispiels der erfindungsgemäßen Verbindungsvorrichtung;
- Fig. 2: eine nicht maßstäbliche und nur prinzipielle Stirnansicht des die Festlegeeinrichtung aufweisenden Abschnitts der erfindungsgemäβen Verbindungsvorrichtung;
- Fig. 3: eine perspektivische, nur prinzipielle Darstellung der an der Verbindungsvorrichtung angeordneten Festlegeeinrichtung, wobei ein Zapfen zur teilweisen Aufnahme eines Teils der Festlegeeinrichtung separat dargestellt ist;
- Fig. 4: eine perspektivische Darstellung eines Ausschnitts der an der Verbindungsvorrichtung angeordneten Festlegeeinrichtung, wobei der Ausschnitt der Festlegeeinrichtung im Festlegezustand gezeigt ist.

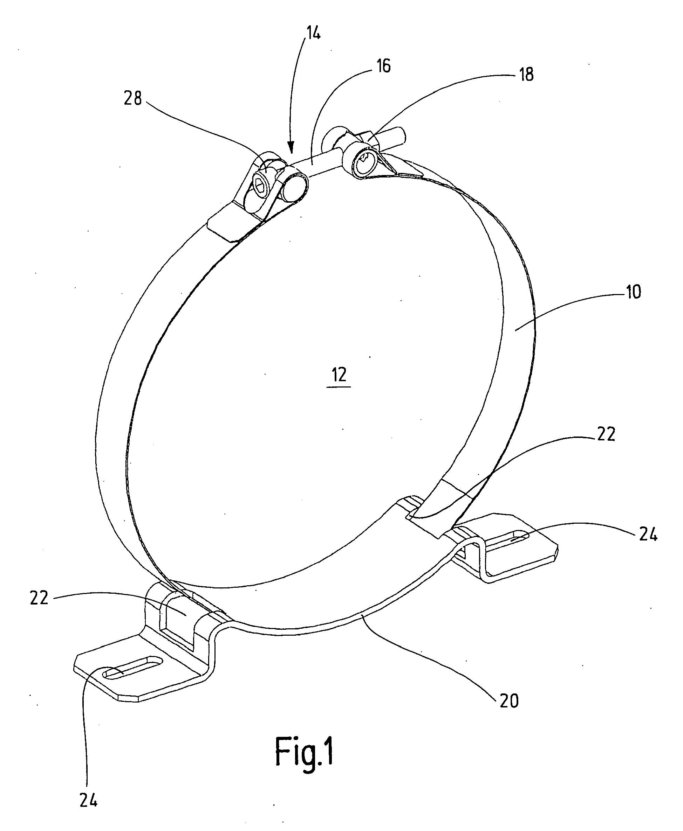

Die in der Fig. 1 dargestellte erfindungsgemäßen Verbindungsvorrichtung in Form einer Schelle weist einen bandförmigen Umfassungskörper 10 auf, der einen vorgebbaren Festlegeraum 12, der auch den Aufnahmeraum bildet, für eine wieder lösbare Festlegung mindestens eines Drittbauteils (nicht dargestellt) umfasst. Der Umfassungskörper 10 wirkt hierbei mit einer Festlegeeinrichtung 14 zusammen, die im miteinander verbundenen Festlegezustand zumindest langfristig gesehen zum Kaltverschweißen neigt. Zumindest Teile der Festlegeeinrichtung 14, die im Festlegezustand miteinander verbunden sind, wie beispielhaft die Teile 16 und 18, bilden derart ein tribologisches System aus, dass unter Einsatz mindestens eines metallischen Additivs und/oder durch geeignete metallische Ausbildung des jeweiligen Teils 16 und/oder 18 der Festlegeeinrichtung 14 als Funktionskomponente des tribologischen Systems wirksam einer Kaltverschweißung begegnet ist.

Bei der in der Fig. 1 gezeigten Ausführungsform begrenzt der Umfassungskörper 10 einen kreisförmigen Aufnahmeraum 12, in den beispielsweise Rohre, Kabel, Druckspeicher oder Katalysatoren (jeweils nicht dargestellt) aufnehmbar sind. An der in der Fig. 1 unteren Seite der Verbindungsvorrichtung weist diese ein Halteteil 20 auf, das aus einem bandförmigen Materialstück, beispielsweise aus Stahl, bestehend ständerförmig ausgeführt jeweils an seinen Enden in Längserstreckung eine mit einem Befestigungsschlitz 24 versehene Befestigungslasche aufweist. Benachbart zu den Befestigungsschlitzen 24 ist jeweils eine Ausnehmung 22 vorgesehen, deren Breite korrespondierend zur Breite des Umfassungskörpers 10 ausgebildet ist und erlaubt, dass der Umfassungskörper 10 in die Ausnehmungen 22 eingreift. Das Halteteil 20 weist in seinem in Längserstreckung mittleren Abschnitt einen gekrümmten Verlauf auf. Umfassungskörper 10 und Halteteil 20 sind im montierten Zustand in diesem Abschnitt teilweise in Anlage aneinander angeordnet. Mittels der Befestigungsschlitze 24, die bei der gezeigten Ausführungsform durch Langlöcher gebildet sind, lässt sich das Halteteil 20 beispielsweise an einer Wand oder einem Maschinenteil (jeweils nicht dargestellt) abringen, indem Befestigungselemente, beispielsweise Schrauben in die Befestigungsschlitze 24 eingesetzt und mit der Wand oder dem Maschinenteil verbunden werden.

Der hier bandförmig dargestellte Umfassungskörper 10 lässt sich auch in Form eines Seiles oder einer Kette ausführen, um dergestalt den jeweiligen Anforderungen insbesondere des aufzunehmenden Drittbauteils (nicht dargestellt) Rechnung zu tragen.

Die in der Fig. 1 im Festlegezustand miteinander verbundenen Teile 16 und 18 der Festlegeeinrichtung 14 weisen zumindest in einem Abschnitt ihrer Oberfläche voneinander abweichende metallische Additive auf oder sind aus voneinander abweichenden metallischen Materialien gebildet. Bei den dahingehenden Oberflächen handelt es sich insbesondere um solche, die im Festlegezustand der Festlegeeinrichtung in Kontakt miteinander sind.

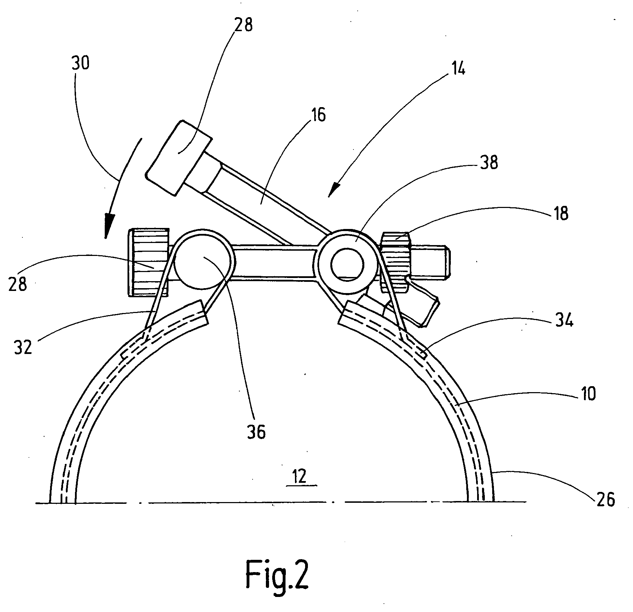

Gemäß der vergrößerten Ansicht der Fig. 2 ist ein erstes Teil 16 und ein zweites Teil 18 der Festlegeeinrichtung durch eine lösbare Verbindung und in der gezeigten Ausführungsform durch eine Schraubverbindung miteinander verbunden. Hierbei ist das erste Teil 16 der Festlegeeinrichtung in Form eines Schraubenbolzens ausgebildet, das zweite damit verbindbare Teil 18 als Schraubenmutter an wählbaren Positionen des ersten Teils 16 anordenbar.

Um eine Kaltverschweißung des Schraubenbolzens als erstes Teil 16 und der Schraubenmutter als zweites Teil 18 wirksam zu begegnen, ist der Schraubenbolzen hier aus Stahl, insbesondere Edelstahl gebildet, während die Schraubenmutter aus Titan besteht. Anstelle von Titan kann jedoch auch durchaus Kupfer zum Einsatz kommen und selbstverständlich ist auch die Umkehrung, in dem die Schraubenmutter aus Stahl, insbesondere Edelstahl gebildet ist und der Schraubenbolzen aus Kupfer oder Titan besteht, zum Vermeiden einer Kaltverschweißung zwischen den beiden Teilen 16 und 18 der Festlegeeinrichtung geeignet. Anstelle der Verwendung von Titan bzw. Kupfer als Vollmaterial für den Schraubenbolzen oder die Schraubenmutter kann auch vorgesehen sein, eines dieser beiden Teile nur oberflächennah mit Titan oder Kupfer zu beschichten. Die Beschichtung erstreckt sich gegebenenfalls nur beschränkt auf solche Oberflächenbereiche, die in Kontakt mit Oberflächen des anderen Teils gelangen, insbesondere im Festlegezustand in Anlage mit diesen sind.

Des Weiteren sind auch Lösungen realisierbar, bei denen der Schraubenbolzen oder die Schraubenmutter mit einer mit einem Außengewinde versehenen Hülse bzw. mit einem Innengewinde versehenen Einsatzteil aus Titan oder Kupfer versehen sind, so dass der Schraubenbolzen oder die Schraubenmutter einen mindestens zweischichtigen Aufbau aufweisen. Im Fall des Schraubenbolzens könnte dieser zunächst mit einem glatten Schaft versehen sein, über den eine geeignete Hülse zu schieben ist, die anschlie-βend durch eine Verbindungstechnik mit dem Schaft verbunden wird. Bei der Schraubenmutter wäre zunächst ein Grundkörper zu fertigen, der bereits die Werkzeugangriffsflächen der Schraubenmutter aufweist, jedoch anstelle eines Innengewindes ein Durchgangsloch, in das das entsprechende Einsatzteil mit Innengewinde einsetzbar und mit diesem verbindbar ist.

Das dahingehende Einsatzteil bzw. die dahingehende Hülse kann beispielsweise durch einen zu einer Spule gewendelten Draht gebildet sein oder einen solchen Draht aufweisen. Die dahingehende Spule bildet auf der Innen- und/oder Außenseite ihres Mantels ein Gewinde aus. Derartige Gewindeeinsätze haben sich zur Gewindepanzerung, d. h. für verschleißarme Gewinde selbst bei häufiger Benutzung bewährt. Als Material für den vorzugsweise rhombisch profilierten Draht zur Ausformung der federnden Wendel des spulenförmigen Gewindes haben sich neben Edelstahl, beispielsweise des Typs A2 bzw. A4 auch Legierungen, beispielsweise Chrom-Nickel-Legierungen sowie Chrom-Nickel-Molybdän-Titan oder auch NickelChrom-Eisen-Titan-Aluminium-Legierungen in der Praxis bewährt. Als besonders vorteilhaft erweist sich hier eine Nickel-Chrom-MolybdänLegierung mit Niob-Zusatz, bei der eine besonders hohe Festigkeit gewährleistet ist. Die Legierung ist beständig gegen zahlreiche stark korrosive Medien und weist einen Nickelanteil von mindestens 58 % sowie einen Chromanteil von ca. 20 %, einen Molybdänanteil von ca. 9 %, einen Niobanteil von ca. 3,5 % und einen Eisenanteil von maximal 5 % auf.
Als Verbindungstechnik für das Einsatzteil bzw. die Hülse bietet sich beispielsweise eine Presspassung, Schweißen, Kleben u. ä. an. Sofern das Einsatzteil bzw. die Hülse, wie beschrieben als Spule ausgeführt ist kann diese auch auf in bzw. auf ein geeignetes Aufnahmegewinde des Grundkörpers gedreht werden. Insbesondere im Hinblick auf die zum Teil hohen Kosten für Materialien wie Titan oder aber auch Kupfer ergibt sich bei diesen Ausführungsformen auch ein Kostenvorteil bei der Herstellung der Festlegeeinrichtung 14.

Die Gewindebereiche des Schraubenbolzens oder der Schraubenmutter können alternativ auch in einem der beschriebenen Beschichtungsverfahren mit Kupfer, Aluminium, Nickel, Titan oder deren Legierungen oder Legierungen auf Nickel-Basis, beispielsweise Ni-Cr-Mo-Legierungen sowie Legierungen auf Cobalt-Basis, beispielsweise Co-Cr-W-Legierungen bzw. hochlegiertem Stahl beschichtet werden. Als Legierung auf Cobalt-Basis bewährt sich eine Zusammensetzung, die die Anteile Chrom 15 bis 35 %, Cobalt 15 bis 40 %, Molybdän maximal 18 % und Wolfram maximal 21 % aufweist.

Wie in Fig. 2 gezeigt, weist der Umfassungskörper 10 Endabschnitte 32 und 34 auf, die mittels der Festlegeeinrichtung 14 aufeinander zubewegbar sind. In der Fig. 2 sind zwei mögliche Anordnungen des ersten und zweiten Teils 16 und 18 der Festlegeeinrichtung relativ zum Umfassungskörper 10 dargestellt. Zwischen den beiden Lagen lässt sich die Festlegeeinrichtung 14 längs des Pfeils 30 verschwenken. Bei der in der Fig. 2 unteren Lage der Festlegeeinrichtung 14 wirkt der Schraubenkopf 28 des ersten Teils 16 über einen ersten Zapfen 36, der in einen Endabschnitt 32 des Umfassungskörpers 10 eingelegt ist auf diesen Endabschnitt 32. Das zweite Teil 18 in Form einer Schraubenmutter wirkt auf einen zweiten Zapfen 38, welcher von einem Endabschnitt 34 des Umfassungskörpers 10 eingefasst ist, so dass eine Verringerung des Abstandes zwischen Schraubenkopf 28 und Schraubenmutter 18 zu der Verringerung des Abstandes der Endabschnitte 32 und 34 des Umfassungskörpers 10 führt, was wiederum zu einer Veränderung der Größe des Festlegeraumes 12 (in Fig. 2 nur teilweise dargestellt) führt.

In Abweichung zur Darstellung in Fig. 1 ist in der Fig. 2 auf den Umfassungskörper 10 ein elastisches Profil 26, beispielsweise ein Gummiprofil aufgebracht, das zumindest in Richtung des aufzunehmenden Drittbauteils (nicht dargestellt) einen Schutz desselben vor Beschädigungen durch den Umfassungskörper 10, der gegebenenfalls scharfkantig sein kann, gewährleistet. Anstelle von Gummi kann für das Profil 26 selbstverständlich auch ein vorzugsweise elastischer Kunststoff, beispielsweise Polyethylen, verwendet werden. Die als Einlegeteile ausgeführten ersten und zweiten Zapfen 36 und 38 werden jeweils von den Endabschnitten 32 bzw. 34 des Umfassungskörpers 10 zumindest teilweise umschlungen. In der Fig. 1 ist die zur Aufnahme des Schraubenkopfs 28 gebildete Ausnehmung im Endabschnitt 32 zu erkennen. Beide Zapfen 36 und 38 sind so ausgeführt, dass zumindest der Schaftabschnitt des Schraubenbolzens 16 die Zapfen 36 und 38 teilweise quer zu ihrer Längsachse durchsetzen kann. Der Zapfen 38 weist hierzu bevorzugt ein passendes Durchgangsloch auf, durch das der Schaftabschnitt des Schraubenbolzens 16 führbar ist. Ein derart in den Zapfen 38 eingeführter Schraubenbolzen 16 lässt sich somit wie in der Fig. 2 gezeigt längs des Pfeils 30 zwischen einer (in der Figur oberen) Freigabestellung und einer (in der Figur unteren) Raststellung verschwenken. In Bereichen der Verschwenkbarkeit ist der zweite Zapfen 38 in dem Endabschnitt 34 so gelagert, dass er in Richtung seiner Längserstreckung nicht verschiebbar ist, jedoch um seine Längsachse zumindest in begrenztem Umfang beispielsweise bis ca. 180° schwenkbar ist. Vorteil dieser Anordnung ist, dass, insbesondere sofern der Schraubenbolzen 16 durch eine Mutter 18 an dem Zapfen 38 gesichert ist, die Festlegeeinrichtung 14 damit auch in der Freigabestellung verliersicher mit dem Umfassungskörper 10 verbunden ist und mit diesem gemeinsam zum Ort der Montage transportiert werden kann.

Anstelle der Ausführung des zweiten Teils 18 der Festlegeeinrichtung 14 in Form einer Schraubenmutter und somit als separates und vollständig vom Umfassungskörper 10 lösbares Teil kann auch vorgesehen sein, dass beispielsweise der zweite Zapfen 38 ein zum Schraubenbolzen 16 korrespondierendes Innengewinde aufweist, sodass die Verwendung einer separaten Schraubenmutter entfällt.

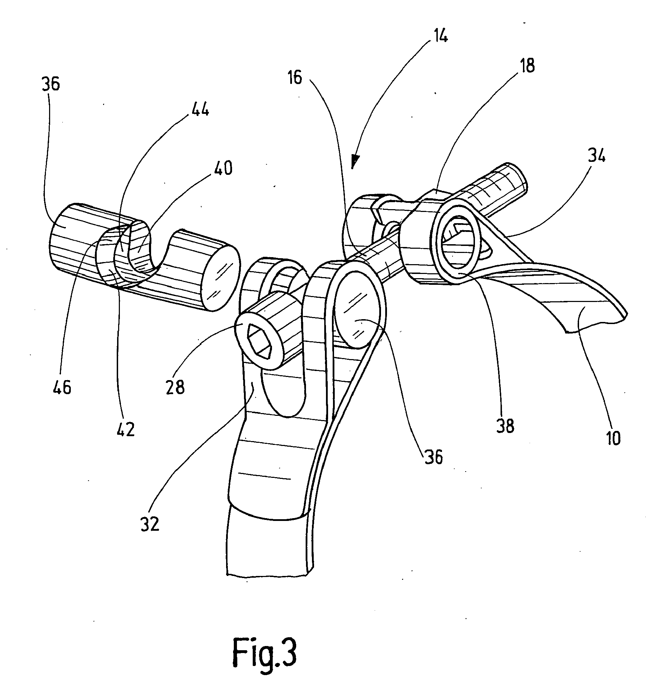

In der Fig. 3 ist die Festlegeeinrichtung der im festgelegten Zustand der Festlegeeinrichtung 14 eingenommenen Raststellung gezeigt. Des Weiteren wurde zur Erläuterung von Details der Zapfen 36 von der Verbindungsvorrichtung gelöst dargestellt. Der Zapfen 36 ist in seiner Einbaulage gezeigt, in der er zumindest teilweise von dem Endabschnitt 32 des Umfassungskörpers 10 umschlungen den Schaft des Schraubenbolzens 16 zumindest abschnittsweise in einer Nut 40, welche durch einander gegenüberliegende und eben ausgebildete Seitenwände sowie einen ungefähr halbkreisförmigen Nutengrund gebildet ist, aufnehmen kann. Sowohl der Zapfen 36 als auch der Zapfen 38 sind vorzugsweise axial unverschiebbar in ihrer Lage im Umfassungskörper 10 gehalten. Die um die Zapfen 36 und 38 jeweils geschlungene Endabschnitte 32 und 34 des Umfassungskörpers 10 sind beispielsweise mittels einer Punktschweißung (nicht gezeigt) mit dem übrigen Umfassungskörper 10 verbunden.

Der Schraubenbolzen 16 weist einen Schraubenkopf 28 mit einer Innensechskant-Ausnehmung auf, die den Eingriff eines Inbusschlüssels zulässt, um so ein Verdrehen des Schraubenbolzens 16 bei der Montage der Verbindungsvorrichtung zu ermöglichen. In Zusammenwirken mit der Schraubenmutter 18 lässt sich so der Schraubenbolzen 16 in Richtung seiner Längserstreckung relativ zum Umfassungskörper 10 verschieben. Der erste Zapfen 36 weist mit Blick auf Fig. 3 eine in radialer Richtung vor der Nut 40 liegende und mit dieser fluchtende kreisförmige Vertiefung 42 auf, an deren Grund beim Übergang zur Nut 40 eine ebene Anlagefläche 44 ausgebildet ist. Der Durchmesser der kreisförmigen Vertiefung 42 ist hierbei dem Außendurchmesser des Schraubenkopfes 28 des Schraubenbolzens 16 angepasst, und bei der in der Fig. 3 gezeigten Raststellung der Festlegeeinrichtung 14 gelangt die der Anlagefläche 44 zugewandte Unterseite des Schraubenkopfes in Anlage an die Anlagefläche 44, die als Anschlag wirkt. In dieser Stellung wird der Schraubenkopf von einer Hinterschneidung 46, die am in der Fig. 3 oberen Abschnitt der kreisförmigen Vertiefung 42 ausgebildet ist, gegen ein Verschwenken aus der Raststellung in die Freigabestellung gehindert. Für einen Übergang von der Freigabestellung in die Raststellung muss von daher zunächst der Schaft des Schraubenbolzens 16 in die Nut 40 sowie die kreisförmige Vertiefung 42 eingeschwenkt werden (gemäß Pfeil in Fig. 2). Bei dem anschließenden Längsverschieben des Schraubenbolzens 28 in Richtung des Endabschnitts 34 dringt der Außenumfang des Schraubenkopfes 28 in die kreisförmige Vertiefung 42 und damit auch in die Unterschneidung 46 ein. Hierzu ist die in ihrem Durchmesser dem Schraubenkopfdurchmesser angepasste kreisförmige Vertiefung 42 über einen Winkelbereich von größer als 180° auszuführen, jedoch muss der zwischen den beiden gegenüberliegenden Hinterschneidungen 46 verbleibende Freiraum ein problemloses Einschwenken des Schaftes des Schraubenbolzens 16 zulassen.

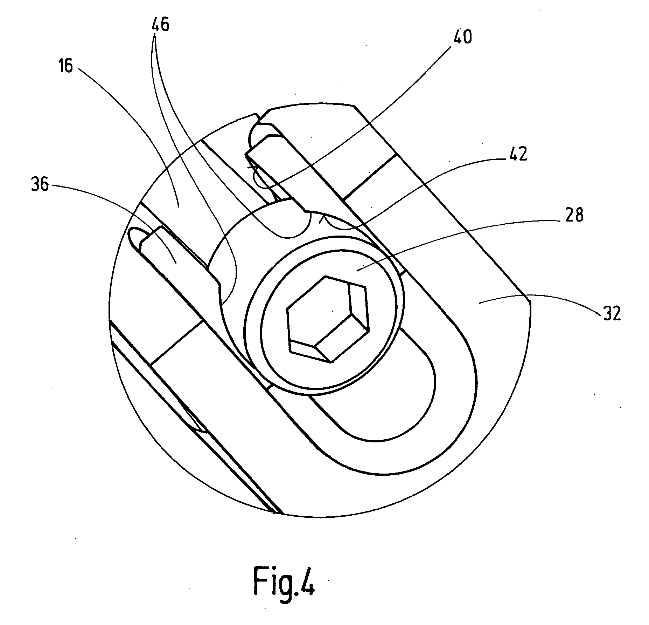

In Fig. 4 ist ein Teil der Festlegeeinrichtung 14 in ihrem Festlegezustand gezeigt, in der sich der Schraubenkopf 28 und damit der Schraubenbolzen 16 des ersten Teils der Festlegeeinrichtung 14 in Zusammenwirken mit dem Zapfen 36 in der im Zusammenhang mit Fig. 3 beschriebenen Raststellung befindet. Aus der vergrößerten Darstellung wird klar, dass der Schraubenkopf 28 durch die mittels der kreisförmigen Vertiefung 42 in der Nut 40 des Zapfens 36 ausgebildeten Hinterschneidungen 46 beidseitig der Nut 40 gesichert ist. So ist auch bei federelastisch ausgebildeten bandförmigen Umfassungskörpern 10 (nicht dargestellt) gewährleistet, dass durch das Bestreben des Umfassungskörper 10 sich aufzuweiten kein Herausrutschen oder - springen des Schraubenkopfes 28 aus dem mit der Nut 40 versehenen Zapfen 36 erfolgt. Bereits durch das einfache Einrasten des Schraubenkopfes 28 in die kreisförmige Vertiefung 42 mit den zugehörigen Hinterschneidungen 46 führt zu einer geschlossenen Verbindungsvorrichtung. So ist die Verbindungsvorrichtung bereits verliersicher an einem aufzunehmenden Drittbauteils anordenbar.

## Patentansprüche

1. Verbindungsvorrichtung in Form von Schellen oder Klemmen, mit mindestens einem Umfassungskörper (10), der einen vorgebbaren Festlegeraum (12) für eine wieder lösbare Festlegung mindestens eines Drittbauteils umfasst und der mit mindestens einer zweiteiligen Festlegeeinrichtung (14) zur Veränderung der Größe des Festlegeraumes (12) zusammenwirkt, **dadurch gekennzeichnet, dass** zumindest Teile (16, 18) der jeweiligen Festlegeeinrichtung (14), die im Festlegezustand miteinander verbunden sind, derart ein tribologisches System ausbilden, dass unter Einsatz mindestens eines metallischen Additives und/oder durch geeignete metallische Ausbildung des jeweiligen Teils (16, 18) der Festlegeeinrichtung (14) als Funktionskomponente des tribologischen Systems wirksam einer Kaltverschweißung begegnet ist.

2. Verbindungsvorrichtung nach Anspruch 1, **dadurch gekennzeichnet, dass** die im Festlegezustand miteinander verbundenen Teile (16, 18) der Festlegeeinrichtung (14) zumindest in einem Abschnitt ihrer Oberfläche voneinander abweichende metallische Additive aufweisen oder aus voneinander abweichenden metallischen Materialien gebildet sind.

3. Verbindungsvorrichtung nach einem der vorhergehenden Ansprüche, **dadurch gekennzeichnet, dass** ein erstes (16) und ein zweites (18) Teil der Festlegeeinrichtung (14) durch eine lösbare Verbindung, insbesondere durch eine Schraubverbindung oder eine Klemmverbindung im Festlegezustand miteinander verbunden sind.

4. Verbindungsvorrichtung nach Anspruch 3, **dadurch gekennzeichnet, dass** das erste Teil (16) der Festlegeeinrichtung (14) in Form eines Bolzens ausgebildet ist und dass das zweite, damit verbindbare Teil (18) an wählbaren Positionen des ersten Teils (16) anordenbar ist.

5. Verbindungsvorrichtung nach Anspruch 3 oder 4, **dadurch gekennzeichnet, dass** das zweite Teil (18) der Festlegeeinrichtung (14) in Form eines Einlegeteils von einem Abschnitt des Umfassungskörpers (10) zumindest teilweise umschlossen ist.

6. Verbindungsvorrichtung nach Anspruch 3 oder 4, **dadurch gekennzeichnet, dass** das zweite Teil (18) der Festlegeeinrichtung (14) als separates, vollständig vom Umfassungskörper lösbares Teil ausgeführt ist.

7. Verbindungsvorrichtung nach einem der Ansprüche 3 bis 6, **dadurch gekennzeichnet, dass** in dem nicht festgelegten Zustand der Festlegeeinrichtung das erste Teil (16) der Festlegeeinrichtung (14) zumindest in Richtung seiner Längserstreckung relativ zum Umfassungskörper (10) verschiebbar ist.

8. Verbindungsvorrichtung nach einem der Ansprüche 3 bis 7, **dadurch gekennzeichnet, dass** an dem Umfassungskörper (10) ein Anschlag (44) für das erste Teil (16) der Festlegeeinrichtung (14) angeordnet ist.

9. Verbindungsvorrichtung nach einem der vorhergehenden Ansprüche, **dadurch gekennzeichnet, dass** das mindestens eine metallische Additiv oder der Werkstoff zumindest eines der Teile (16, 18) der Festlegeeinrichtung (14) Chrom und/oder Kupfer und/oder Titan und/oder Nickel und/oder Aluminium aufweist.

10. Verbindungsvorrichtung nach einem der vorhergehenden Ansprüche, **dadurch gekennzeichnet, dass** mindestens ein Teil (16, 18) der Festlegeeinrichtung (14) aus Stahl, insbesondere aus Edelstahl gebildet ist.

11. Verwendung eines metallischen Werkstoffes als Additiv oder Material bei der Ausbildung der Oberfläche eines Teiles (16, 18) einer Festlegeeinrichtung (14), das im Festlegezustand mit einem weiteren Teil der Festlegeeinrichtung (14) verbunden ist, um derart ein tribologisches System auszubilden, bei dem einem Kaltverschweißen der Teile der Festlegeeinrichtung (14) begegnet ist.
